# EUROPEAN PATENT APPLICATION

(11) **EP 4 403 736 A1**
(43) Date of publication of application: **24.07.2024**
(21) Application number: 24150773.0
(22) Date of filing: 08.01.2024
(51) Int. Cl.: E05F 15/63, E05B 83/34

(54) **DRIVE AND LOCKING SYSTEM FOR A FLAP OR A DOOR**

(30) Priority: 17.01.2023 DE 102023100987
(71) Applicant: Minebea Mitsumi Inc., Kitasaku-gun, Nagano 3890293 (JP)
(72) Inventor: Schrottka, Matthias, 80807 München (DE); Frattini, Massimo, 10044 Pianezza (IT)
(74) Representative: Liesegang, Eva

(57) **Abstract**

The invention relates to a drive and locking system (1) for a flap (3) or door comprising an actuating drive (5) for adjusting the flap (3) or door, wherein the actuating drive (5) comprises an electric motor and an output for conveying a torque; and a locking device (41), wherein both the flap (3) or door and the locking device (41) are mechanically coupled to the output of the actuating drive(5) and are adjustable by it;
wherein the locking device (41) comprises a first locking member (65), which is adjust-ably arranged on a fixed frame of the flap (3) or door and interacts with it for locking the flap (3) or door. The first locking member (65) and the flap (3) or door are engaged when the flap (3) or door is in a closed state and the first locking member (65) is mechanically coupled to the output of the actuating drive (5) and adjustable by it, so that the locking device (41) is unlocked when the flap (3) or door is being opened by the actuating drive (5).

## Description

The invention relates to a drive and locking system for a flap or door, for example a fuel flap or charging flap of a vehicle. The expression vehicle refers to automobiles, trucks, utility vehicles, independent of their drive system, without being limited to those. In particular electric vehicles, vehicles having combustion-engines, fuel cell/hydrogen vehicles, hybrid vehicles, fully or partially self-driving/autonomous vehicles and vehicles driven fully or partially by a user are referred to. In other use cases, the invention can relate to a drive and locking system for a flap or door in an industrial application, for example robotic applications, like self-driving warehouse robots. Further use cases can comprise aircrafts or watercrafts.

### BACKGROUND

Drive and locking systems driven by an electric motor are used in various applications. For example they are used in the automotive sector for adjusting flaps or doors. Often the flap or door must me locked, in order to prevent unauthorized access or to prevent an accidental opening of the flap or door. The locking procedure often should be carried out automatically, without interaction by a user. Usually a dedicated actuator is used for the locking system. Thus, such systems usually comprise two actuating drives, each having an electric motor. Using one actuating drive for adjusting the flap or door and another actuating drive for the locking system requires relatively much space and generates high costs. Especially in automotive applications, also requirements to the weight or safety can be important.

### OVERVIEW

So, often the problem of providing a cheap drive and locking system, having small weight and dimension, but still offering various functionalities and being reliable in operation, occurs,

It is an object of the invention to provide a small, cost efficient and reliable drive and locking system for a flap or door.

This object is solved by a drive and locking system having the features of claim 1. Embodiments of the invention are specified in the dependent claims.

The invention relates to a drive and locking system for a flap or door comprising an actuating drive for adjusting the flap or door, wherein the actuating drive comprises an electric motor and an output for conveying a torque.

Furthermore it comprises a locking device, wherein both the flap or door and the locking device are mechanically coupled to the output of the actuating drive and are adjustable by it. The locking device comprises a first locking member, which is adjustably arranged on a fixed frame of the flap or door and interacts with it for locking the flap or door. The first locking member and the flap or door are engaged when the flap or door is in a closed state, wherein the first locking member is mechanically coupled to the output of the actuating drive and adjustable by it, so that the locking device being unlocked, when the flap or door is being opened by the actuating drive.

In some embodiments of the drive and locking system, the flap or door and the locking mechanism are mechanically coupled to the actuating driving such that, starting from a state where the flap or door is in the closing position and in a locked state, controlling the actuating drive to perform an opening operation first causes an unlocking operation and then causes a movement of the flap or door in direction of the opening position.

Furthermore, the mechanical coupling between the first locking member and the output of the actuating drive can comprise a flexible member like a first rope or cable, or it can comprise a rigid member like a rod. For example, the first rope or cable can be a Bowden Cable.

In some exemplary embodiments, the output of the actuating drive is rotatably coupled to a lever arm, wherein the first locking member comprises a first distal end, that is coupled to the lever arm, and wherein the lever arm is being rotated by the actuating drive, if the flap is being opened, such that a pulling force for opening the flap or door is applied to the first locking member.

The lever arm can be formed and arranged at the output of the actuating drive, such that the lever arm performs a rotational movement in the range from 20° to 270°, when the flap or door is being opened.

In some embodiments the drive and locking system comprises a braking system arranged at the frame for providing a holding force, wherein a second distal end of the locking member is locked in a locking position by the braking system, if the flap or door is in the closing position.

The braking system preferably comprises at least one elastically deformable element, wherein the elastically deformable element provides the holding force on the first locking member, if the flap or door is in the closing position. The elastically deformable element can comprise at least one sheet made of spring steel. For example, the deformable element can comprise two metal sheets that are arranged such that the first locking member can be pulled or pushed between the two sheets, wherein the metal sheets are being elastically deformed by the first locking member. When the first locking member is in the locking position, it is clamped by the two metal sheets.

Furthermore, the drive and locking system can comprise a first spring that is arranged at the braking system, wherein the first spring exerts a force on the first locking member in direction of the locking position of the locking member, which can be a direction opposite to the direction of the pulling force.

It is further suggested that the first locking member is being pulled or pushed into the braking device by the first spring, if the flap is in the closing position.

In some exemplary embodiments, there is a second locking member arranged at or integrally formed with an inside part of flap, wherein the second locking member protrudes and can be brought into engagement with the second locking member for locking the flap or door.

In some embodiments the braking device is being sealed, such that it is protected against fluids or dirt entering the braking device. I.e., a movable sealing member and a second spring can be arranged at the frame, wherein the second spring exerts a force on the sealing member, if the flap or door is in the closing position and wherein the sealing member is movable by the second spring.

Preferably, the sealing member is movable by the second locking member, wherein the second spring is in a compressed state, if the flap is in the closing position.

The invention can also relate to a disengagement system, providing a mechanical recovery mode for opening the flap or door.

In a first aspect, the disengagement system can comprise means for decoupling the output of the actuator from the flap. In some embodiments the disengagement system includes a hollow output shaft of the actuating drive, in which an inner axle is arranged. The inner axle can be coupled detachably to the output shaft or the flap such that there is no torque transfer between the output of the actuating drive and the flap, if the inner axle is detached from the output of the actuating drive or from the flap.

In some embodiments, the inner axle is coupled to the hollow output shaft in a torque proof manner. The inner axle can protrude outward of the output shaft and the actuating drive, such that it can be mechanically coupled to the flap or door. I.e., the inner axle can be mechanically coupled to the lever arm, driving the hinge and thus, also driving the flap.

In order to couple the inner axle to the lever arm, the inner axle can comprise a protrusion that can be engaged with a recess or notch of the lever arm. I.e., the inner axle can be guided through an opening of the lever arm, with the opening having a notch at its inner circumference. In the normal operation, the protrusion of the inner axle and the notch are engaged, and a torque can be transmitted from the inner axle to the lever arm. In some embodiments, a first extend of the inner axle is arranged inside the hollow shaft and a second extend, which protrudes outward of the hollow output shaft, comprises a sleeve, wherein the protrusion is formed at the sleeve.

Preferably the inner axle can be moved in an axial direction. Thus, by displacing the inner axle in an axial direction, the protrusion of the inner axle or sleeve can be disengaged from the notch, such that the lever arm can be rotated freely with respect to the hollow shaft.

Furthermore, there can be a fifth spring arranged inside the hollow shaft, which applies a force on the inner axle in a direction opposite to the direction the inner axle is being moved for disengaging the lever arm from the inner axle or sleeve. The fifth spring can be supported by the sleeve that is arranged on the inner axle and by the hollow shaft, for example inside a stepped portion of the hollow output shaft.

For displacing the inner axle in the axial direction, the disengagement system can further comprise a part that is movable by the user. In some embodiments, the movable part comprises a sledge which is arranged such that it can push an end face of the inner axle, so as to move the inner axle in the axial direction. I.e., the sledge can have a shape, protrusion, fin, or the like, which can be brought in contact with the end face of the inner axle, if the sledge is being moved in a direction perpendicular to the axial direction of the inner axle.

The sledge can be connected to a flexible or rigid member, for example to a second rope, cable, rod, or the like, i.e. to a second Bowden Cable that can be pulled by the user. Thus, by pulling the second Bowden Cable, the sledge can be moved such that is pushes against an end face of the inner axle. This causes the inner axle to be displaced in an axial direction, such that the protrusion is moved out of the notch of the lever arm, thus disengaging the lever arm from the output shaft. The displacement of the inner axle causes the fifth spring to get compressed, so as to provide a counter force for pushing the axle back, and reengaging the protrusion with the notch. Furthermore, the sledge can be connected to a fourth spring, wherein the fourth spring can pull the sledge back to a rest position. Hence, the normal operation state can be restored and the recovery system can be set up for a subsequent use.

In a second aspect, the disengagement system can comprise means to enable a user to manually open the flap or door. In some embodiments, the flap or door can be opened partially, by pulling the rope, cable or rod. It is advantageous, if pulling the second rope, cable or rod activates both, the mechanism for disengaging the output of the actuating drive the flap and the mechanism for opening the flap at least partially.

For example, the first Bowden Cable can be arranged in such a way, that a force is applied to the flap in the opening direction, if the first Bowden Cable is being pulled. In some exemplary embodiments, the first Bowden Cable is pulling the sledge along a trajectory comprising an inclined sliding surface, wherein the inclined surface is a part of, or mechanically coupled to the hinge or the flap. Furthermore, the trajectory of the moving sledge can be confined by a housing or guide, such that the sledge exerts a force on the inclined surface providing a torque for opening the flap. In some examples, the sliding surface for the moving sledge comprises a first sliding surface and a second sliding surface, wherein the second sliding surface has a larger slope than the first sliding surface. As the sledge is confined in the second housing, the sledge exerts a force on the second sliding surface, while it is moving it. The second sliding surface can be a surface of the hinge, for example in the form of a ramp. Then the sledge can push the hinge, such that a torque is applied, causing the flap to open at least partially.

In some embodiments the flap is opened by an opening angle in the range of 4° to 45°, preferably in the range of 5° to 20°, by pulling the first Bowden Cable. Hence, a user can grab the partially opened flap using the fingers and manually open it. In particular, the user can then manually move the flap to the opening position.

The actuating drive is driven by an electric motor. It can be advantageous, if the actuating drive comprises an electronically commutated electric motor and/or a reduction gear, wherein the output of the actuating drive comprises the output shaft, with the output shaft being integrally formed with a gear wheel of the reduction gear.

The invention also relates to a fuel flap or charging port flap for a vehicle, comprising a drive and locking system according to the invention. The flap or door can be a charging port flap, a fuel flap or a flap of a closure device of a tool compartment, for example. In particular, a control unit of the actuating drive can be connected to a bus, for example a LIN bus or CAN bus of the car or vehicle. The locking of the flap or door then can be controlled by a vehicle controller via the bus system. For example, the actuating drive can be controlled to lock the flap only, if a predetermined parameter meets a given criteria. For example, the vehicle control unit can control the actuating drive to lock the flap, if a predetermined velocity of the vehicle has been reached, a signal strength of a wireless user authentication signal is below a minimum value, or a predetermined time has lapsed. The parameter can be evaluated by the controller of the actuating drive or by the vehicle control unit.

The terms "rope", "cable" and "rod" are meant to be understood in a brought sense, including any suitable variation in form or material. The terms "rope" and "cable" are meant to cover any suitable flexible member that is technically applicable, while the term "rod" is meant to cover any suitable rigid member that is technically applicable. Whenever the description refers to the "first Bowden Cable" or to the "second Bowden Cable", it is meant as an exemplary embodiment and should not be understood as a limitation.

### SHORT DESCRIPTION OF THE DRAWINGS

The disclosure will be explained in more detail in the following with the aid of exemplary examples with reference to the accompanying drawings. In the schematic representation of the figures:
Fig. 1a: represents a perspective view of an exemplary embodiment of the drive and locking system having an actuator for driving the flap of a charging port bay of an electric car, with the flap being in the closing position;
Fig. 1b shows a perspective view on the backside of the drive and locking from fig. 1a;
Figs 2a shows a perspective view on the drive an locking system analogues to figure 1a for the case of an opened flap;
Figs 2b shows a perspective view on the drive an locking system analogues to figure 1b for the case of an opened flap;
Fig. 3 shows a perspective view on the top of the actuating drive of the drive and locking system of figures 1a and 1b, for the case that the flap is in the closing position;
Fig. 4a shows a cross-sectional view on an exemplary braking device of the drive and locking system of figures 1a and 1b, where the flap is locked and in the closing position;
Fig. 4b shows a cross-sectional view along the cut A-A of fig. 4a;
Fig. 5 shows a perspective view on the top of the actuating drive of the drive and locking system of figures 2a and 2b, for the case that the flap is unlocked and in the opened position;
Fig. 6a shows a cross-sectional view on an exemplary braking device of the drive and locking system of figures 2a and 2b, for the case that the flap is unlocked and in the opened position;
Fig. 6b shows a cross-sectional view along the cut B-B of fig. 6a;
Fig. 7a shows another perspective view on the exemplary drive and locking system, with a top view on the first half-shell of the second housing, for the case when the drive and locking system is in the normal operation state and the flap is in a closed state;
Fig. 7b shows a cross-sectional view along cut C-C of figure 7a
Fig. 8a shows a perspective view on the exemplary drive and locking system analogues to fig. 7a, when the drive and locking system is in the recovery operation state and the flap is in a partially opened state;
Fig. 8b shows a cross-sectional view along cut D-D of figure 8a
Fig. 9a shows a top view on the lever arm and the inner axle of actuating drive of the previous figures, when the drive and locking system is in the normal operation state and the output shaft of the actuating drive and the lever arm are engaged in a torque-proof manner;
Fig. 9b shows a cross-sectional view along cut E-E of figure 9a;
Fig. 10a shows a top view on the lever arm and the inner axle of actuating drive of the previous figures, when the drive and locking system is in the recovery operation state and the output shaft of the actuating drive and the lever arm are disengaged;
Fig. 10b shows a cross-sectional view along cut F-F of figure 10a;

### DETAILED DESCRIPTION OF THE DRAWINGS

The embodiments described in the following serve as an exemplary illustration of the invention only. The invention can vary in form and shape without changing the functional principle. The scope of protection of the closing and locking system according to the invention is only determined by the patent claims.

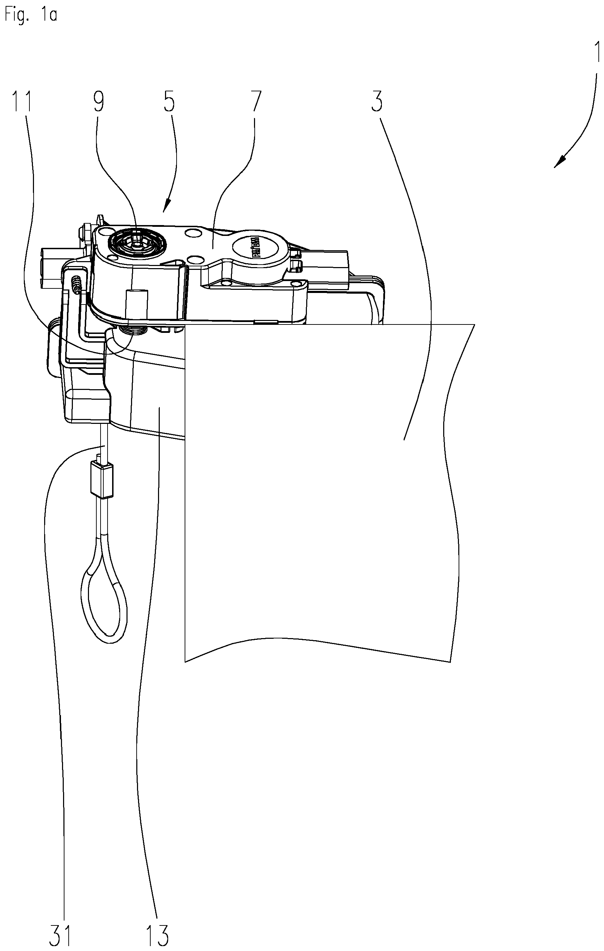

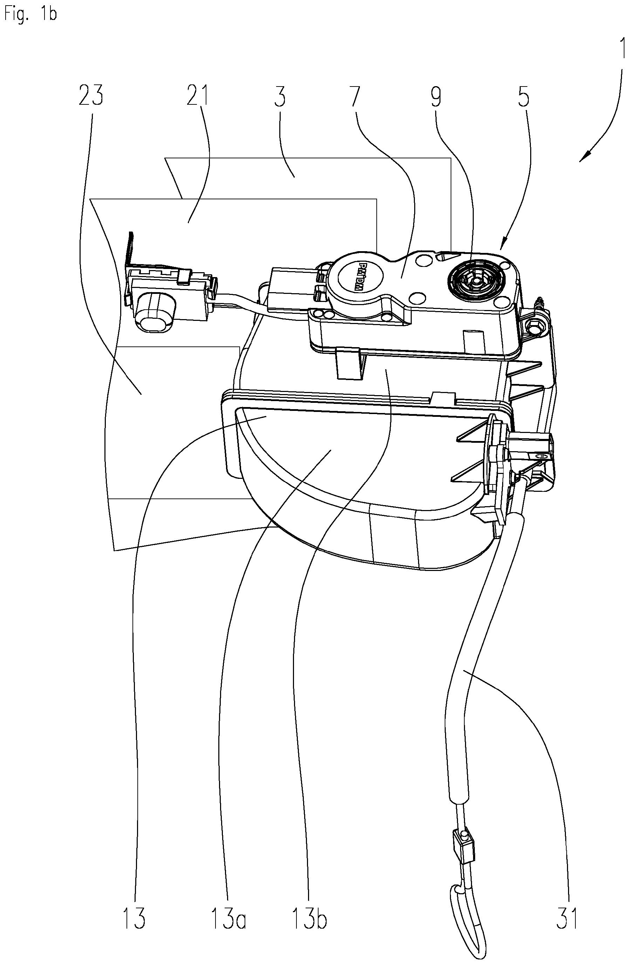

Figs. 1a and 1b each show a perspective view of an exemplary embodiment of a drive and locking system 1 for a charging port flap 3 that is in a closed state, wherein fig. 1a show a front view on the flap 3 and fig. 1b shows a view on the backside of the flap 3. The flap 3 is depicted schematically, only. It is mechanically coupled to an actuating drive 5 having an electric motor and a reduction gear. The actuating drive 5 comprises a first housing 7 that accommodates the electric motor, the reduction gear and a motor controller. The reduction gear comprises an output shaft 9 for providing a torque via an opening 11 of the first housing. A second housing 13 having a second opening comprises two half-shells 13a, 13b and faces the opening 11 of the first housing 7. In the second housing 13 a hinge 15 is accommodated. The hinge 15 comprises a through hole as a radial bearing for a shaft 17 of the flap 3, The shaft 17 of the flap 3 can be coupled the the output shaft 9 of the actuating drive 5 via the respective openings of the first housing 7 and second housing 13.

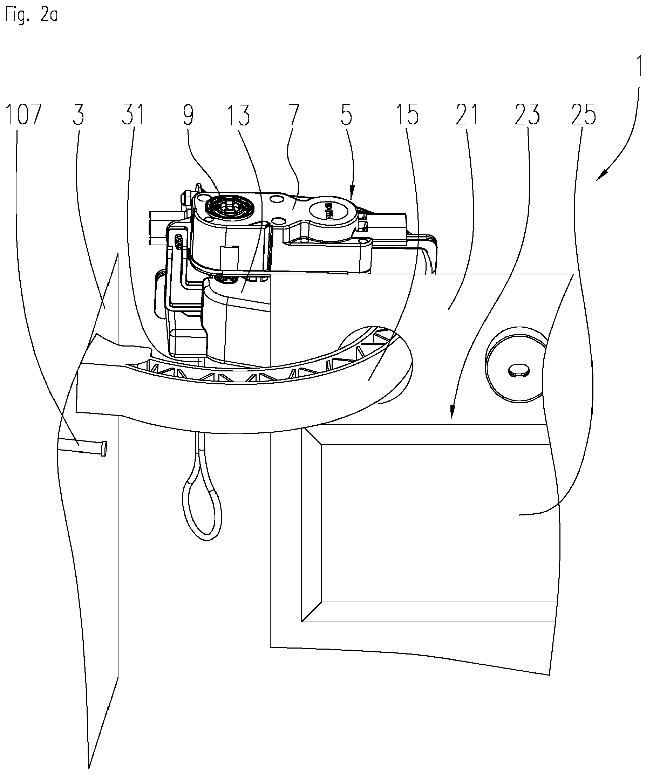

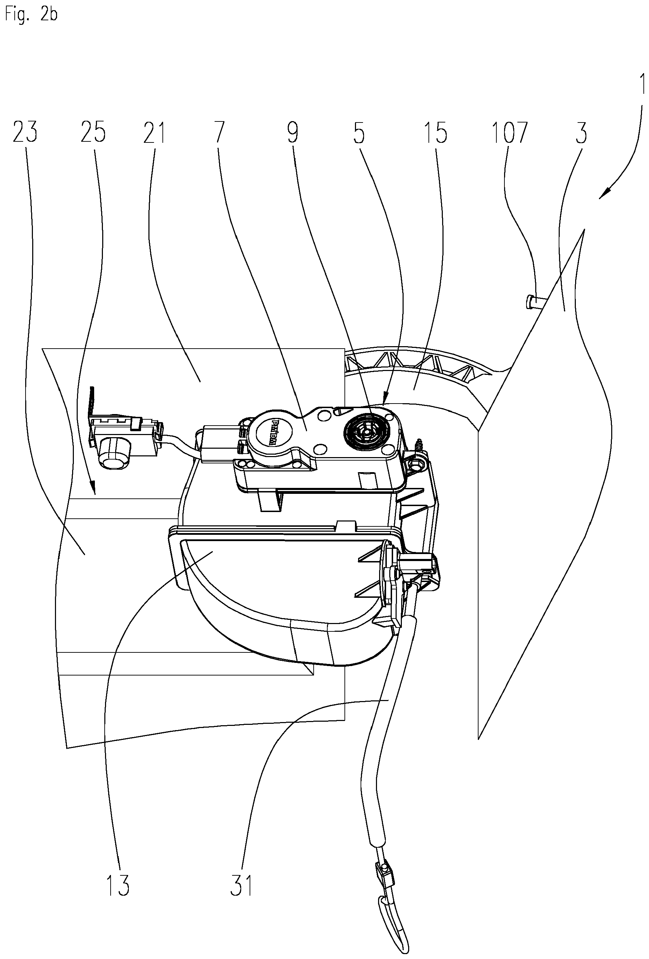

In Figs 2a and 2b the system of figures 1a and 1b is shown for the case of an opened flap 3. Here the hinge 15 carrying the flap 3 is protruding out of the second housing 13 for the most part. In the case of a closed flap 3, the hinge 15 is mostly accommodated inside the second housing 13, as in figures 1a and b. There a third housing 21 enclosing the space of a charging port bay 23 can be seen. The third housing 21 also comprises a third opening 25, through which the hinge 15 is extending. The flap 3 is attached to the hinge 15 and the charging port bay 23 can be closed by adjusting the flap, i.e. by moving the flap 3 to the closing position.

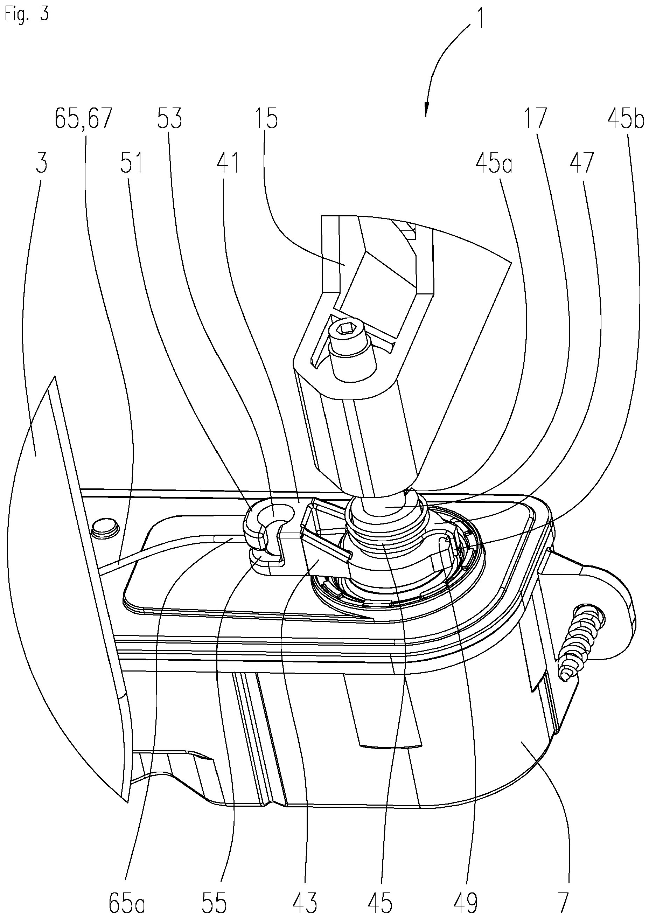

The perspective rear view of fig. 3 shows the arrangement of the first housing 7 of the actuator, the second housing 13 accommodating the hinge 15, as well as the back side of the third housing 21 of the charging port bay 23.

Furthermore, the figures 1a to 2b show a first Bowden Cable 31, which can be pulled by a user in order to decouple the flap 3 from the actuating drive's output. I.e., by pulling the first Bowden Cable 31, the shaft 17 can be decoupled from the output of the actuating drive 5 and from the locking system. Hence, the flap 3 can be opened, even in the case, when the electric motor of the actuating drive 5 is not powered. I.e., after pulling the first Bowden Cable 31, a user can manually open the flap 3 and access the charging port bay 23 of the electric car for recharging the car's battery. So the first Bowden Cable 31 provides a failsafe-system, for the case that the car's battery is empty and cannot provide the energy to the actuating drive 5 for opening the flap 3 of the charging port bay.

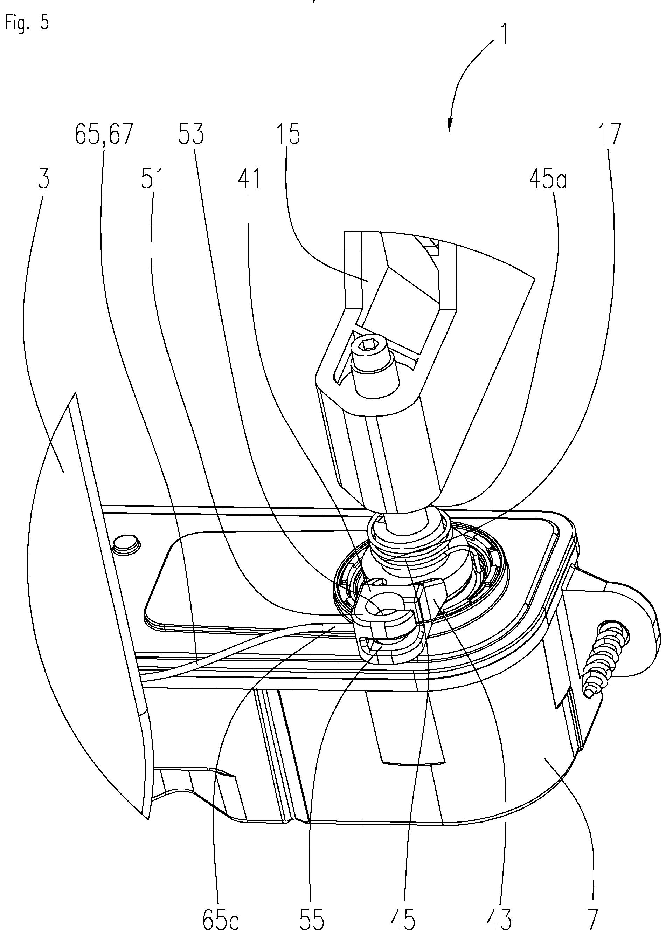

Fig. 3 shows a perspective view on the top of the actuating drive 5, where the second housing 12 is not shown. So the coupling of the driving shaft 9 and the lever arm 43 with the actuating drive 5 can be seen. The output shaft 9 provides a torque to drive the hinge 15. Figure 5 also provides a good view on a locking system 41 for locking the flap 3, comprising a lever arm 43 and a third spring 45. The third spring 45 comprises a first leg 45a and a second leg 45b and is arranged around the driving shaft 9. The lever arm 43 comprises a fixing portion 47, which encompasses the driving shaft and is mechanically coupled to that. So the lever arm 43 can be rotated about the axis of the driving shaft 9 by driving the driving shaft 9. The fixing portion 47 comprises a first notch 49 in which a first leg 45a of the third spring 45 is fixed. A second notch or recess 49 is formed in the hinge 15, in which the second leg 45b of the third spring 45 is arranged or fixed. Thus, the actuating drive 5 can provide a torque to the hinge 43, via the third spring 45 that is fixed to the lever arm 43 and to the hinge 15. The third spring has the effect that a movement of the hinge and the flap is delayed, when the output shaft is rotated by the actuating drive 5. This ensures that the flap or door is getting unlocked before the onset of the opening movement of the flap or door. I.e., if the electric motor of the actuating drive 5 is being energized for opening the flap 3, the rotation of output shaft 9 rotates the lever arm 43, by which the flap 3 or door is getting unlocked. At the same time, the third spring 45 is being compresses or stretched, hence the force transmitted from the third spring 45 to the hinge increases. When spring force reaches a threshold, the torque transmitted to the hinge 15 is sufficient to move the hinge and the opening of the flap starts.

Figure 3 shows a state with the flap 3 being in the closing position and the locking system locking the flap 3. The locking system comprises a first locking member 65 having a first distal end 65a and a second distal end 65b. In the exemplary embodiment the first locking member 65 comprises a second Bowden Cable 67.

At its first distal end 65a, the second Bowden Cable 67 comprises a disc-shaped member 69. The disc-shaped member 69 is attached to the holding portion 51 of the lever arm, such that the second Bowden Cable 67 is being pulled, when the lever arm 43 is being rotated in an opening direction. The holding portion 51 of the lever arm 43 comprises a cylindrical recess 53, inside which the disc-shaped member 69 is held. Furthermore a slit 55, through which the second Bowden Cable 67 is guided, is formed in the wall of the cylindrical recess 53 of the holding portion 51,

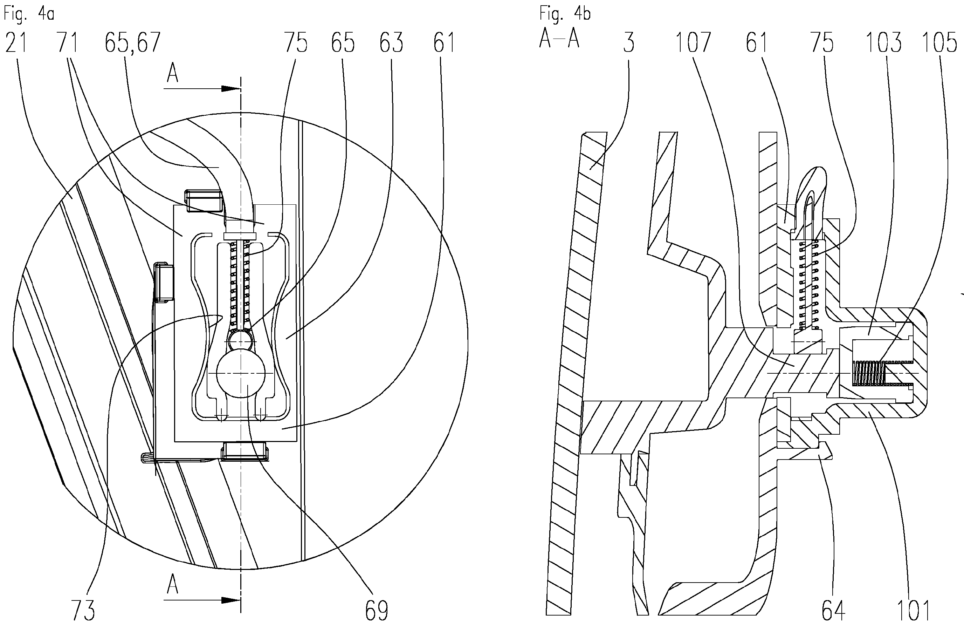

Fig. 4a shows a top view on a braking device 61 of the braking system 51. The braking device 61 is arranged at a stationary part, e.g. at a frame of the flap 3. In the example of figure 4a, the braking device 61 is arranged at a backside of the charging port bay, i.e. at the backside of the third housing 21. The braking device 61 is accommodated in a forth housing 63. The fourth housing 63 is fixed to the third housing 21 by the help of a latching system 65. Alternatively, the fourth housing 63 can be integrally formed with the third housing 21. The braking device 61 comprises two elastic elements 71, e.g. made of spring steel or similar metal sheets. In the locking state, the elastic elements 71 hold the second distal end 61b of the first locking member 61, i.e. of the second Bowden Cable 67. For this purpose the second distal end 61b of the first locking member 61 comprises a disc-shaped member 69. In the locking state the elastic elements are bent towards each other in order to hold the disc-shaped member 69. In order to make sure the first locking member is being pulled towards the braking device, i.e. that the disc-shaped member 69 is being pulled towards the inside of the braking device, there is a second spring 75 arranged at second distal end 61b of the first locking member 61. An inner wall of the braking device 1 comprises two adjacent convex portions 73, which are formed such that the deformation of the elastic elements 71 is limited. For locking the flap 3, the disc-shaped member 69 is being pushed or pulled towards the inside of the braking device, wherein the movement is supported by the second spring 75. When the disc-shaped member 69 is moving between the two elastic elements, those are being bent away from each other, such that the disc-shaped member 69 can be moved to its locking position. At the same time, the maximal deformation of the elastic elements 71 is limited by the convex portions 73 of the inner wall of the braking device 61. By this arrangement a snapping back of the elastic elements 71 is seconded, when the disc-shaped member 69 is close to its locking position. Once the elastic elements 71 have snapped back, they partially embrace the disc-shaped member 69 and hinder it from moving out of the braking device for unlocking the flap 3.

Fig. 4b shows a sectional view along the cut B-B of fig. 4a. Here a protruding element 107 of the flap 3, which is pointing in an inward direction towards the braking device 61, can be seen. Furthermore, when the first locking member/the disc-shaped element 69 is in the locking position, it engages with the protruding element 107 for locking the flap 3.

The exemplary embodiment of figures 4 to 4b also shows an optional sealing system 101, by which the braking device 61 can be sealed, i.e. protected from liquids or dust entering the braking device 61. The sealing system 101 comprises a plug 103, wherein the protruding element 107 pushes the plug 103 in an inward direction upon closing the flap 3. The plug 103 compresses a second spring 105 upon the flap 3 closing operation. If the flap 3 is being opened again, the second spring 105 pushes back the plug 103 in an outward direction, such that an opening of the braking device 61 is being closed. Hence, the plug 103 acts as a seal of the braking device 61.

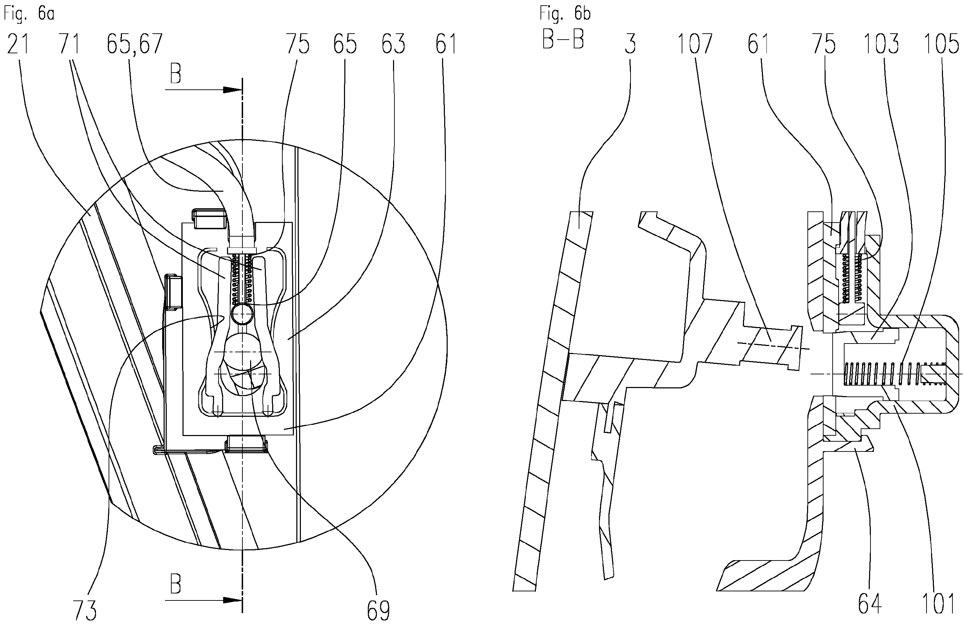

Figure 5 shows a perspective view on the top of the actuating drive 5, for the case of a opened and unlocked flap 3. In comparison to figure 3, the lever arm 43 has been rotated by about 90°. Figures 6a and 6b show a top view of the braking device 61 and a sectional view along the cut A-A. Different to figures 4a and 4b, the flap 3 is in the opened and thus unlocked state. By rotation the lever arm 43, the disc-shaped element 69 is pulled in a direction out of the braking device, 61 deforming the elastic elements 71 and disengaging the disc-like member 69 from the protruding member 107 of the flap 3. Hence, the flap 3 is unlocked and opened. Furthermore the first spring now is compressed, such that it can assist in pushing the disc-shaped member 69 back to the locking position in a subsequent closing process. As the protruding member has been moved away from the plug 103 upon opening the flap 3, the second spring 105 can push the plug 103 in an outward direction, such that the opening 111 of the braking device 61 is sealed.

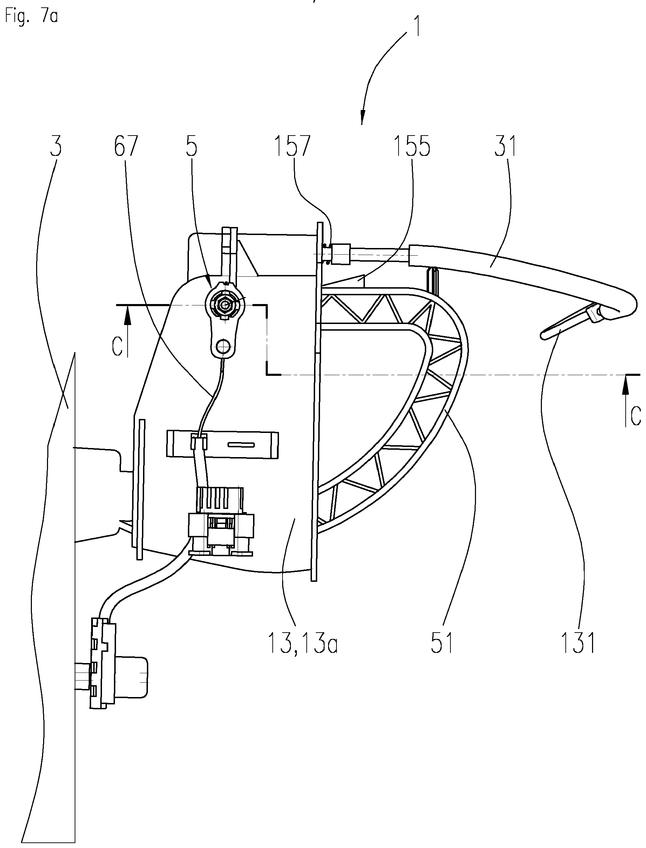

In a further aspect a disengagement system, which provides means to implement a recovery mode for the drive and locking system 1 is disclosed. An exemplary embodiment of the disengagement system is illustrated in the figures 7a to 10b.

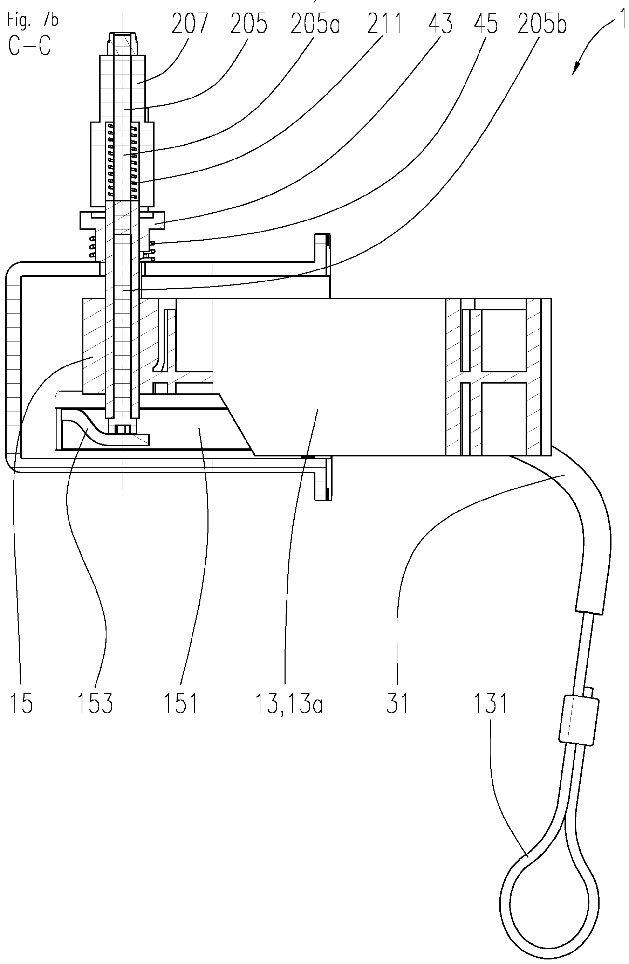

Figure 7a shows a top view on the first half-shell 13a of the second housing 13, for the case when the flap 3 is in a closed state. As the second half-shell 13b of the second housing 13 is not shown, also a part of the hinge 31 is visible. At a first distal end a handle 131 is fixed to the first Bowden Cable 31 and can be pulled by a user. Figure 7a and fig. 7b showing a cross-sectional view along cut C-C of figure 7a illustrate the state, where the first Bowden Cable 31 was not pulled, so the system is in the normal operation state.

For example, the handle 131 can be arranged in the trunk or in the motor compartment of an electric vehicle, with a second distal end of the first Bowden Cable 31 being connected to the flap opening and locking system. I.e., at its second distal end, the first Bowden Cable 31 is connected to a sledge 151. By pulling the first Bowden Cable 31, the sledge 151 can be moved, so as to decouple the lever arm 43 and the driving shaft 9 from the actuating drive 5. The sledge 151 is guided by the walls of a fourth housing 63. It comprises a curved fin 153, wherein the fin 153 is arranged such that it interacts with the disengagement-system, if the sledge 151 is being pulled.

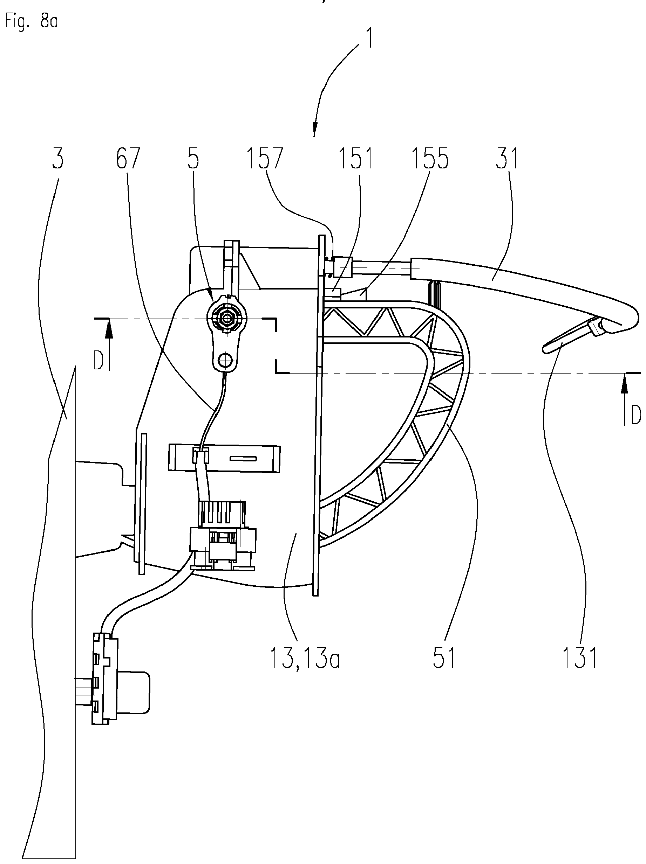

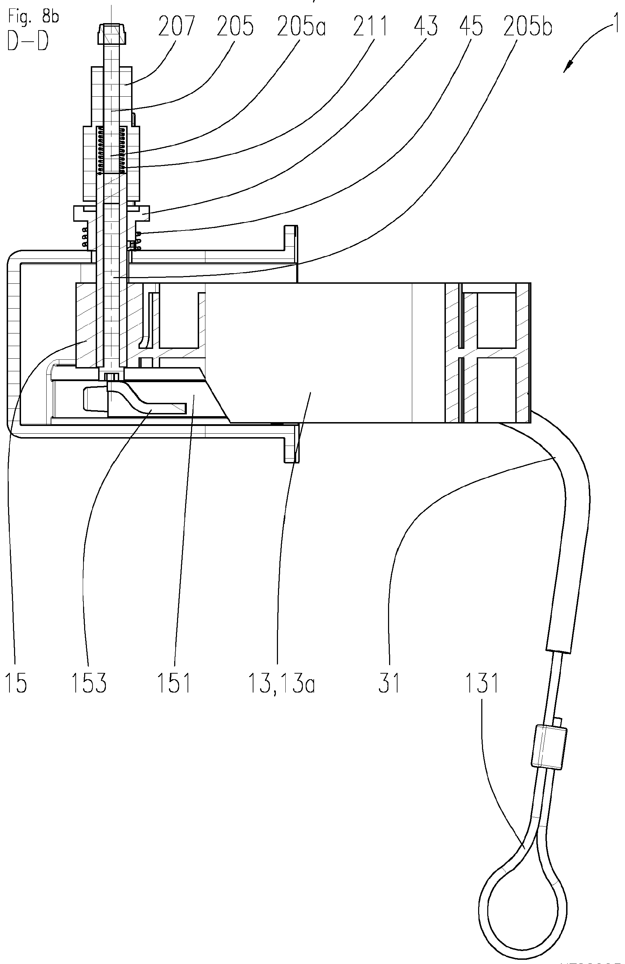

This recovery operation state is illustrated in figure 8a and the cross-sectional view of figure 8b along the cut B-B. I.e., via the fin 153 the moving sledge 15 can cause a decoupling of the lever arm 43 from the actuating drive 5.

The disengagement-system comprises the output shaft 9 of the actuating drive 5 and an inner axle 205. The output shaft 9 is shaped as an hollow shaft. The inner axle 205 is arranged coaxially to the hollow output shaft 9. A first extend 205a of the inner axle 205 comprising a first distal end 206a of the inner axle 205 and is at least partially arranged inside the hollow output shaft 9. A second extend 205b of the inner axle 205, comprising a second distal end 206b and an optional sleeve 207, is protruding to the outside of the actuating drive 5 and is guided through an opening of the lever arm 43 and through a throughhole of the hinge 15. In alternative embodiments, the sleeve 207 can be integrally formed with the inner axle 205.

In order to transfer a torque from the output shaft 9 to the lever arm 43, the inner axle 205 is coupled to the output shaft 9 in a torque proof manner. Furthermore, the sleeve 207 comprises a protrusion 213 that can be engaged with a notch 215 of the lever arm 43. The notch 215 is arranged at an inner circumference of the opening of the lever arm 43. The second distal end 205b of the inner axle 205 can be contacted by the fin of the sledge 151. I.e., the inner axle 205 and the sledge 151 with its fin 153 are arranged such that the fin 153 of the moving sledge 151 can push the inner axle 205, so as to displace it in an axial direction. The displacement is larger than the length of the overlap between the notch and the opening of the lever arm 43. Thus, if the first Bowden Cable 31 is pulled, the sledge starts to move away from its rest position and the fin will push the inner axle, disengaging the protrusion 213 of the inner axle 205/sleeve 207 from the notch 215 of the lever arm 43. Hence, the mechanical coupling between the output shaft 9 of the actuating drive 5 and the lever arm 43 is dislodged.

Furthermore, by pulling the first Bowden Cable 31, the sledge 151 is being pulled along a straight part of the lever arm 43, which comprises a ramp 155. When the sledge 151 is moved onto the ramp 155, the lever arm 43 is forced to rotate about the axis of the driving shaft 9 and the flap 3 is opened partially.

Hence, after pulling the first Bowden Cable, the flap will be partially opened and decoupled from the actuating drive. This allows for a user to manually open the flap. I.e., a user can manually open the flap, even if the actuating drive is not powered or defect. Thus, in the case of a flap of a charging port bay, this ensures that a user can recharge the battery of the car. A forth spring 157 can be coupled to the sledge 151 and the fourth housing 63, such that the sledge 151 is being pulled back to its rest position by the forth spring 157.

By opening the flap 3, the protrusion 213 of the inner axle 205 will be rotated with respect to the notch 215 of the opening of the lever arm 43. Thus, the flap 3 will stay decoupled from the output shaft 9 of the actuating drive, until the flap3 is moved back to the closing position, realigning the protrusion 213 and the notch 215.

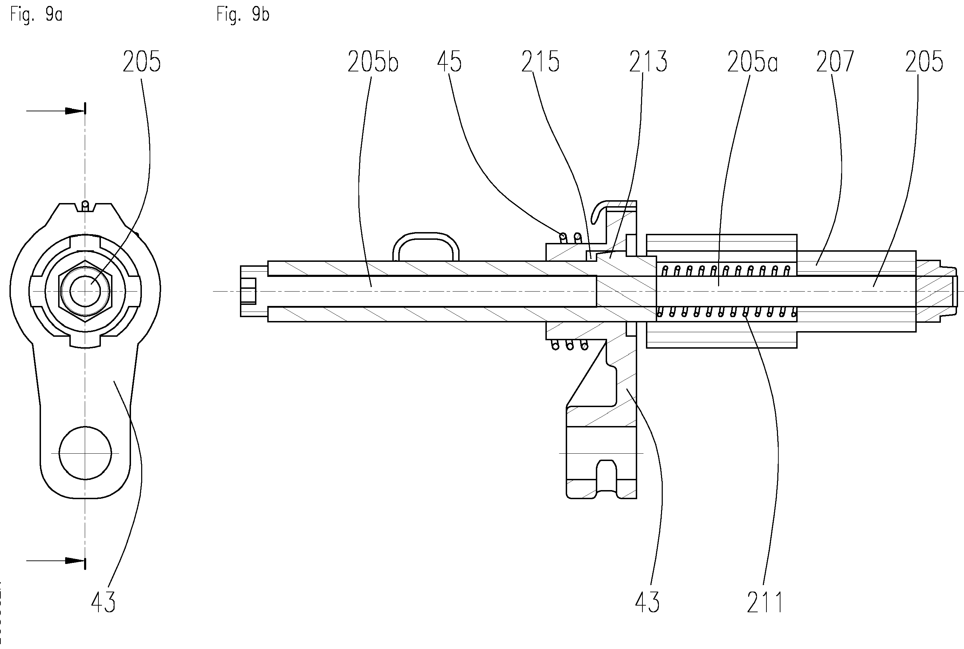

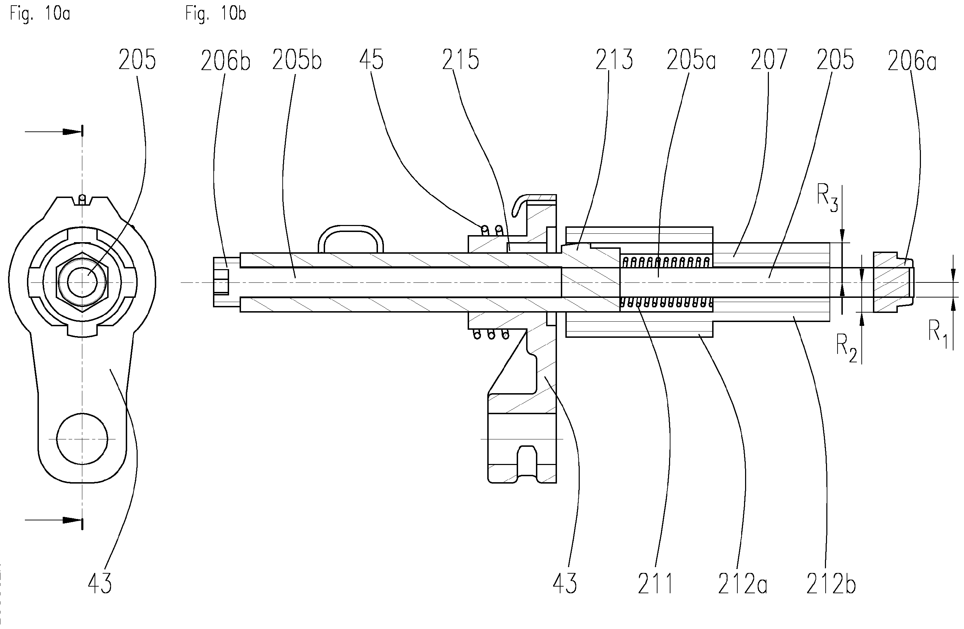

The disengagement-mechanics can be seen best in figure 9a, with a cross-sectional view along line A-A shown in figure 9b, and 10a, with a cross-sectional view along line B-B shown in figure 10b. Figures 9a and 9b show a state where the out shaft and the lever arm 43 are engaged in a torque-proof manner, while figures 10a and 10b illustrates a disengaged state. A fifth spring 211 is arranged at the inner axle 205, such that it exerts a force on the inner axle 205 in an axial direction, if the inner axle is disengaged (figures 10a, 10b) from the lever arm 43. For example, the fifth spring 211 can be arranged inside the hollow output shaft 9. Preferably, the fifth spring 211 is arranged at an outer circumference of the inner axle, inside the hollow shaft 9, as it is shown in the example of figures 7a to 1b. The hollow output shaft 9 comprises a wide section 212a having a radius R1. The fifth spring 211 is accommodated in this wide section 211a. Furthermore, the radius R1 is larger than an inner radius R3 of a narrow section 212b of the hollow output shaft 9. On one hand, the fifth spring 211 is confined by a step of the inner circumference of the hollow output shaft 9 between the wide section 211a and the narrow section 211b. On the second hand, the fifth spring is confined by the sleeve 207. Hence, by pushing the sleeve 207 and the inner axle towards the actuating drive, the fifth spring 211 is being compressed, so as to provide a counter-force on the sleeve 207 and inner axle. So, the fifth spring 211 pushes the inner axle 205 in a direction opposite to the direction the inner axle 205 is pushed by the fin 153. The protrusion 213 of the sleeve 207 has an outer radius R2 < R3, such that it can be moved into the space surrounded by the wide section 212a of the hollow shaft 9 for disengaging it from the lever arm 43.

Hence, if the flap 3 is brought back to the closing position, so the notch 215 and the protrusion 213 are aligned to each other, the force exerted by the fifth spring will push the inner axle such that the protrusion 213 snaps into the notch 215. Consequently, the lever arm 43 and the inner axle 205 are being re-engaged in a torque proof manner (as in figures 9a and 9b). I.e., after recharging the car battery and manually pushing the flap 3 to the closing position, the normal operation state of the drive and locking system 1 can be restored.

### LIST OF REFERENCE NUMERALS

1 drive and locking system
3 flap
5 actuating drive
7 first housing
9 output shaft
11 opening (of first housing)
13 second housing (of hinge)
13a, 13b half-shells (of second housing 13)
15 hinge
17 shaft (of the hinge/flap)
21 third housing (of charging port bay)
23 charging port bay
25 third opening (of the charging part bay's housing)
31 first Bowden Cable
41 locking system
43 lever arm
45 third spring
45a, 45b first and second leg
47 fixing portion
49 second notch
51 holding portion
53 cylindrical recess
55 slit
61 braking device
63 fourth housing (of braking device)
64 latching system
65 first locking member
65a first distal end (of the first locking member)
65b second distal end (of the first locking member)
67 second Bowden cable
69 disc-shaped member
71 elastic elements
73 convex shape
75 first spring
101 sealing arrangement
103 plug
105 second spring
107 protrusion
131 handle
151 sledge
153 fin
155 ramp
157 fourth spring (at sledge)
203 hollow shaft
205 inner axle
205a first extend (inside actuator)
205b second extend (outside actuator)
206a first distal end (of the inner axle)
206b second distal end (of the inner axle)
207 sleeve
209 step
211 fifth spring (at inner axle)
212a nrrow section
212b wide section
213 protrusion
215 recess/notch

## Claims

1. Drive and locking system (1) for a flap (3) or door comprising an actuating drive (5) for adjusting the flap (3) or door, wherein the actuating drive (5) comprises an electric motor and an output for conveying a torque; and
a locking device (41), wherein both the flap (3) or door and the locking device (41) are mechanically coupled to the output of the actuating drive(5) and are adjustable by it; wherein the locking device (41) comprises a first locking member (65), which is adjustably arranged on a fixed frame of the flap (3) or door and interacts with it for locking the flap (3) or door,
wherein
the first locking member (65) and the flap (3) or door are engaged, when the flap (3) or door is in a closed state, and wherein the first locking member (65) is mechanically coupled to the output of the actuating drive ( 5) and adjustable by it, so that the locking device (41) is being unlocked, when the flap (3) or door is being opened by the actuating drive (5).

2. Drive and locking system (1) according to claim 1, wherein the flap (3) or door and the locking mechanism are mechanically coupled to the actuating drive (5) such that, starting from a state where the flap (3) or door is in the closing position and in a locked state, controlling the actuating drive (5) to perform an opening operation first causes an unlocking operation and then causes a movement of the flap (3) or door in direction of the opening position.

3. Drive and locking system according to claim 1 or 2, wherein the mechanical coupling between the first locking member (65) and the output of the actuating drive (3) comprises a second rope or a cable or a rod; wherein the second rope or cable preferably is a second Bowden Cable (67).

4. Drive and locking system (1) according to any of the preceding claims, wherein the output of the actuating drive (5) is rotatably coupled to a lever arm (43), wherein the first locking member (65) comprises a first distal end (61a), that is coupled to the lever arm (43), and wherein the lever arm (43) is being rotated by the actuating drive (5), if the flap (3) is being opened, such that a force for opening the flap (3) or door is applied to the first locking member (65).

5. Drive and locking system (1) according to any of the preceding claims, wherein the lever arm (43) is coupled to the output of the actuating drive (5) such that the lever arm (43) performs a rotational movement along a rotational angle in the range from 10° to 340°, when the flap (3) or door is adjusted from a closed position to an opening position.

6. Drive and locking system (1) according to claim 4 or 5, wherein a third spring (45) is arranged at the lever arm (43), wherein the third spring (45) is fixed to the lever arm (43) and to the flap (3) or to a hinge(15) carrying the flap (3), so as to transmit a torque from the output shaft (9) of the actuating drive (5) to the flap (3) via the lever arm (43) and the third spring (45).

7. Drive and locking system (1) according to any of the preceding claims, wherein the drive and locking system (1) comprises a braking device (61) arranged at the frame for providing a holding force, wherein a second distal end (65b) of the locking member (65) is locked in a locking position by the braking device (61), if the flap (3) or door is in the closing position; wherein the braking device (61) preferably comprises at least one elastically deformable element (71), wherein the elastically deformable element (71) applies the holding force to the first locking member (61), if the flap (3) or door is in the closing position.

8. Drive and locking system (1) according to claim 7, wherein a first spring (75) is arranged at the braking system, wherein the first spring (75) exerts a force on the first locking member (65), so as to adjust the first locking member (65) into the locking position of the first locking member (65); wherein the first locking member (65) preferably is being pulled or pushed into the braking device (61) by the first spring (75), if the flap (3) or door is in the closing position.

9. Drive and locking system (1) according to any of the preceding claims, wherein a second locking member (66) is arranged at or integrally formed with an inside part of flap (3), wherein the second locking member (66) protrudes inwardly into the frame and can be brought into engagement with the first locking member (65) for locking the flap (3) or door.

10. Drive and locking system (1) according to any of the preceding claims, wherein a movable sealing member (103) and a second spring (105) are arranged at the frame, wherein the second spring (105) exerts a force on the sealing member (103), if the flap (3) or door is in the closing position and wherein the sealing member (103) is movable by the second spring; wherein the sealing member (103) preferably is movable by the second locking member (66), wherein the second spring (105) is in a compressed state, if the flap (3) is in the closing position.

11. Drive and locking system (1) according to any of the preceding claims, wherein the drive and locking system (1) comprises a disengagement system, wherein the disengagement system comprises means for decoupling the output of the actuating drive (5) from the flap (3) .

12. Drive and locking system (1) according to claim 11, wherein the disengagement system comprises an hollow output shaft (9) of the actuating drive (5) and an inner axle (205), wherein the inner axle (205) is arranged coaxially to the hollow output shaft (9), wherein a first extend of the inner axle (205) is arranged inside the hollow output shaft (9) and coupled to the output shaft (9) in a torque-proof manner.

13. Drive and locking system (1) according to claim 12, wherein the disengagement system comprises the lever arm (43), wherein the hollow output shaft (9) is detachably coupled to the lever arm (43); and/or
wherein the inner axle (205) is arranged in the hollow output shaft (9) so that it can be moved in an axial direction, wherein the hollow output shaft (9) can be decoupled from the lever arm (43) by displacing the inner axle (205) in the axial direction; and/or
wherein the inner axle (205) comprises a second extend (205b) having a protrusion (213) and wherein the lever arm (43) comprises a recess or a notch (215), wherein, in a normal operation state, the protrusion (213) of the inner axle (205) and the notch or recess (215) are engaged, such that a torque can be transmitted from the inner axle (205) to the lever arm (43);
wherein a sleeve (207) may be fixed to the second extend (205b) of the inner axle (205), wherein the protrusion (213) of the inner axle (205) is formed at the sleeve (207).

14. Drive and locking system (1) according to claim 13, wherein the protrusion (213) of the inner axle (205) or sleeve (207) can be disengaged from the recess or notch (215), by displacing the inner axle (205) in the axial direction.

15. Drive and locking system (1) according to any of the claims 12 to 14, wherein the disengagement system comprises a fifth spring (211), wherein the fifth spring (211) is arranged inside the hollow output shaft (9) and applies a force on the inner axle (205) in a direction opposite to the direction the inner axle (205) is being moved for disengaging the lever arm (43) from the inner axle (205) or sleeve; and/or
wherein the disengagement system comprises a movable sledge (151) , wherein the sledge (151) is arranged such that it can be pushed or pulled against a second distal end (206b) of the inner axle (205), so as to displace the inner axle (205) in the axial direction, and/or wherein the sledge (151) is movable along a sliding surface, wherein an opening force is applicable to the flap (3), by moving the sledge (151) along the sliding surface;
wherein the drive and locking system (1) may comprise the hinge carrying the flap (3), wherein the sliding surface may comprise a first sliding surface and a second sliding surface, wherein the second sliding surface is formed at the hinge (15) and has a slope that is larger than the slope of the first sliding surface, such that the sledge (151) exerts a force on the hinge (15) upon sliding along the second sliding surface, so as to open the flap (3) at least partially.

16. Drive and locking system (1) according to any of the claims 11 to 15, wherein the disengagement system is coupled to a first rope or cable or a rod, wherein the output of the actuating drive (5) is decoupled from the flap (3), if the first rope. cable or rod is being pulled; wherein the first rope or cable preferably comprises a first Bowden Cable (31).

17. Drive and locking system (1) according to any of the preceding claims , wherein the actuating drive (5) comprises an electronically commutated electric motor and a reduction gear, wherein the output of the actuating drive (5) comprises an output shaft (9) that is integrally formed with a gear wheel of the reduction gear.

18. Fuel flap or charging port flap for a vehicle, comprising the drive and locking system (1) according to any of the preceding claims.
